# EUROPEAN PATENT APPLICATION

(11) **EP 4 318 789 A1**
(43) Date of publication of application: **07.02.2024**
(21) Application number: 22922635.2
(22) Date of filing: 25.01.2022
(51) Int. Cl.: H01M 50/578, H02J 7/00, H01M 10/44

(54) **BATTERY CELL, BATTERY, ELECTRIC DEVICE, AND METHOD AND DEVICE FOR MANUFACTURING BATTERY CELL**

(71) Applicant: Contemporary Amperex Technology Co., Limited, Ningde, Fujian 352100 (CN)
(72) Inventor: LI, Guanzhou, Ningde, Fujian 352100 (CN); MIAO, Siyu, Ningde, Fujian 352100 (CN); WANG, Zhiming, Ningde, Fujian 352100 (CN); HUANG, Caixia, Ningde, Fujian 352100 (CN); TANG, Minghao, Ningde, Fujian 352100 (CN)
(74) Representative: Gong, Jinping
(86) International application number: PCT/CN2022/073883
(87) International publication number: WO 2023/141784

(57) **Abstract**

Embodiments of the present application provide a battery cell. The battery cell includes: a shell, including a first wall; an electrode assembly, disposed inside the shell; and a terminal assembly, including an electrode terminal and an elastic member, where the electrode terminal includes a fixed portion for electrical connection with the electrode assembly and a movable portion for electrical connection with a current collecting component, the fixed portion is fixedly disposed on the first wall, the movable portion is movably disposed on the first wall, the movable portion has a first position in contact with the fixed portion and a second position separated from the fixed portion, the elastic member is used for applying elastic force to the movable portion to maintain the movable portion in the first position, and where the movable portion is configured to move from the first position to the second position against the elastic force when internal pressure of the battery cell reaches a threshold, so as to release the internal pressure. The battery cell has a long service life.

## Description

### Technical Field

The present application relates to the field of battery technology, and particularly to a battery cell, a battery, a power consumption device, and a battery cell manufacturing method and device.

### Background Art

Energy conservation and emission reduction are the key to sustainable development of the automotive industry. Electric vehicles have become an important part of the sustainable development of the automotive industry due to their advantages of energy conservation and environmental protection. For electric vehicles, the battery technology is an important factor for their development.

In the development of the battery technology, in addition to improving performance of batteries, the service life is also a non-negligible issue. If the service life of a battery cannot be guaranteed, the use cost of the battery is relatively high. Therefore, how to prolong the service life of a battery is an urgent technical problem to be solved in the battery technology.

### Summary

The present application provides a battery cell, a battery, a power consumption device, and a battery cell manufacturing method and device. The battery cell has a long service life.

The present application is implemented through the following technical solutions:
In a first aspect, the present application provides a battery cell, including: a shell, including a first wall; an electrode assembly, disposed inside the shell; and a terminal assembly, including an electrode terminal and an elastic member, where the electrode terminal includes a fixed portion for electrical connection with the electrode assembly and a movable portion for electrical connection with a current collecting component, where the fixed portion is fixedly disposed on the first wall, the movable portion is movably disposed on the first wall, the movable portion has a first position in contact with the fixed portion and a second position separated from the fixed portion, the elastic member is configured for applying elastic force to the movable portion, so as to maintain the movable portion in the first position, and where the movable portion is configured to move from the first position to the second position against the elastic force when internal pressure of the battery cell reaches a threshold, so as to release the internal pressure.

In the battery cell according to the embodiments of the present application, the movable portion is split from the fixed portion, and the movable portion is movably disposed on the first wall. When thermal runaway occurs in the battery cell, gas generated by electrochemical reactions of the electrode assembly increases the internal pressure of the battery cell, and the high-pressure gas can drive the movable portion to move from the first position to the second position against the elastic force applied to the movable portion by the elastic member, so that the movable portion is separated from the fixed portion, the internal pressure of the battery cell is released, and a connection between the battery cell and an external circuit is cut off. When the internal pressure of the battery cell decreases to be less than the elastic force applied to the movable portion by the elastic member, the movable portion moves towards the first position under the elastic force of the elastic member. When the movable portion is in the first position, the movable portion is electrically connected to the fixed portion, so that the battery cell continues to work, the safety and utilization of the battery cell are improved, the service life of the battery cell is prolonged, and a battery including the battery cells has a long service life.

According to some embodiments of the present application, the fixed portion is insulated and isolated from the first wall, the movable portion in the first position is insulated and isolated from the first wall, and the movable portion in the second position is in contact with the first wall to conduct electricity.

In the foregoing solution, the movable portion in the second position is in contact with the first wall to conduct electricity, so as to short-circuit the battery cell. The circuit of the battery including the battery cells is in a connected state, without affecting normal operation of the battery.

According to some embodiments of the present application, the terminal assembly further includes: an insulator fixed to the first wall, where the fixed portion is fixedly disposed on the insulator, and the movable portion is movably disposed on the insulator.

In the foregoing solution, the insulator serves as a mounting base for the fixed portion and the movable portion to assemble the fixed portion and the movable portion. The fixed portion and the movable portion may be insulated and isolated from the first wall through the insulator.

According to some embodiments of the present application, the first wall is formed with a mounting hole, and the insulator is disposed inside the mounting hole.

In the foregoing solution, the insulator is disposed inside the mounting hole to assemble the insulator with the first wall, so as to realize cooperation of the fixed portion and the movable portion with the first wall.

According to some embodiments of the present application, the insulator includes a cylinder, an outer circumferential surface of the cylinder is connected to a wall of the mounting hole, the movable portion is movably disposed inside the cylinder in an axial direction of the cylinder and is in sealing fit with an inner circumferential surface of the cylinder, the fixed portion is fixed to the cylinder, and the fixed portion is located on a side, close to an interior of the battery cell, of the movable portion in the axial direction of the cylinder.

In the foregoing solution, the outer circumferential surface of the cylinder is connected to the wall of the mounting hole to ensure a large contact area between the insulator and the first wall, and there is a space for the movable portion to move inside the cylinder. The movable portion is in sealing fit with the inner circumferential surface of the cylinder, so that when the thermal runaway occurs inside the battery cell, the gas inside the battery cell can drive the movable portion to move in the axial direction of the cylinder.

According to some embodiments of the present application, the cylinder includes a side wall and a bottom wall, the side wall is disposed at a periphery of the bottom wall, the fixed portion penetrates the bottom wall, the movable portion is in sealing fit with an inner circumferential surface of the side wall, a first chamber is formed between the movable portion and the bottom wall, and the bottom wall or the fixed portion is formed with a first through hole for communicating the interior of the battery cell and the first chamber.

In the foregoing solution, the movable portion is in sealing fit with the inner circumferential surface of the side wall, the first chamber is formed between the bottom wall and the movable portion, the first chamber is in communication with the interior of the battery cell, and the gas inside the battery cell can enter the first chamber to drive the movable portion to move, so that the movable portion can move to the second position and the movable portion can be separated from the fixed portion.

According to some embodiments of the present application, a breathable film is disposed at the first through hole.

In the foregoing solution, the breathable film has functions of breathing and blocking dust and liquid, and can limit entry of an electrolyte into the first chamber and avoid the influence of the electrolyte on the movement of the movable portion relative to the cylinder, so as to ensure flexible and stable movement of the movable portion relative to the cylinder.

According to some embodiments of the present application, the insulator further includes a top cover, the top cover covers an end, away from the interior of the battery cell, of the cylinder, the movable portion includes a piston and a piston rod, the piston is movably disposed inside the cylinder and is in sealing fit with the inner circumferential surface of the cylinder, one end of the piston rod is connected to the piston, and the other end passes through the top cover for connecting the current collecting component.

In the foregoing solution, the top cover covers the end, away from the interior of the battery cell, of the cylinder, which can protect the piston and prevent impurities from entering the cylinder to affect the sliding fit between the piston and the cylinder.

According to some embodiments of the present application, the elastic member is sleeved on the piston rod, one end of the elastic member abuts against the piston, and the other end abuts against the top cover.

In the foregoing solution, the elastic member is sleeved on the piston rod to ensure that the elastic force applied by the elastic member to the movement is balanced, and to ensure the stable movement of the piston relative to the cylinder.

According to some embodiments of the present application, the battery cell further includes: a pressure relief channel, where one end of the pressure relief channel extends to the inner circumferential surface of the cylinder; when the movable portion is in the first position, the movable portion seals one end of the pressure relief channel, so as to disconnect the pressure relief channel from the interior of the battery cell; and when the movable portion is in the second position, the movable portion opens one end of the pressure relief channel, so as to communicate the pressure relief channel with the interior of the battery cell.

In the foregoing solution, because the pressure relief channel connects internal and external environments of the battery cell, when the movable portion moves towards the second position, the pressure relief channel is gradually opened, and the pressure inside the battery cell is released through the pressure relief channel, whereby the pressure relief action of the battery cell is implemented.

According to some embodiments of the present application, the pressure relief channel includes a first segment and a second segment in communication with each other, the first segment is disposed on the cylinder, and the second segment is disposed on the first wall.

In the foregoing solution, the first segment is disposed on the cylinder, the second segment is disposed on the first wall, and the first segment is in communication with the second segment to connect the pressure relief channel with the first chamber and the external environment, so as to release the pressure inside the battery cell to the external environment.

According to some embodiments of the present application, the side wall is formed with a second through hole, a protrusion is formed on the wall of the mounting hole, the protrusion extends into the second through hole, and the movable portion is, when in the second position, in contact with the protrusion to conduct electricity.

In the foregoing solution, when the movable portion is in the second position, the movable portion is electrically connected to the first wall. In a battery including a plurality of battery cells, when thermal runaway occurs in a battery cell and the movable portion of the battery cell is in the second position, the movable portion of the battery cell conducts electricity with the first wall to short-circuit the interior of the battery cell, while the circuit of the entire battery remains open, so the battery cell has a little impact on the whole battery and normal operation of the battery can be guaranteed.

According to some embodiments of the present application, two terminal assemblies are provided, and the electrode terminals of the two terminal assemblies have opposite polarities.

In the foregoing solution, because there are two terminal assemblies with opposite polarities, when thermal runaway occurs in the battery cell, the movable portion moves to the second position to release the pressure inside the battery cell in a timely manner. In the embodiment where the movable portion in the second position can be electrically connected to the first wall, when the movable portion is in the second position, the battery cell can be internally short-circuited, so in the battery including a plurality of battery cells, the circuit of the entire battery can be kept open to ensure normal operation of the battery.

According to some embodiments of the present application, the shell includes a shell body and an end cover, the shell body has an opening, the end cover is configured for covering the opening, and the first wall is the end cover.

In the foregoing solution, the first wall is the end cover, and the end cover is separated from the shell body to facilitate manufacturing and implement assembly of the battery cell.

In a second aspect, the present application provides a battery, including the battery cell described in any of the foregoing embodiments.

In a third aspect, the present application provides a power consumption device, including the battery described in any of the foregoing embodiments.

In a fourth aspect, the present application provides a battery cell manufacturing method, including: providing a shell, where the shell includes a first wall; providing an electrode assembly; providing a terminal assembly, where the terminal assembly includes an electrode terminal and an elastic member, and the electrode terminal includes a fixed portion and a movable portion; disposing the electrode assembly inside the shell; disposing fixedly the fixed portion on the first wall, and connecting electrically the fixed portion to the electrode assembly; and disposing movably the movable portion on the first wall, so that the movable portion has a first position in contact with the fixed portion and a second position separated from the fixed portion, where the elastic member is configured for applying elastic force to the movable portion, so as to maintain the movable portion in the first position; and the movable portion is configured to move from the first position to the second position against the elastic force when internal pressure of the battery cell reaches a threshold, so as to release the internal pressure.

In a fifth aspect, the present application provides a battery cell manufacturing device, including: a provision module, configured to provide a shell, an electrode assembly, and a terminal assembly, where the shell includes a first wall, the terminal assembly includes an electrode terminal and an elastic member, and the electrode terminal includes a fixed portion and a movable portion; and an assembly module, configured to dispose the electrode assembly inside the shell, fixedly dispose the fixed portion on the first wall, electrically connect the fixed portion to the electrode assembly, and movably dispose the movable portion on the first wall, so that the movable portion has a first position in contact with the fixed portion and a second position separated from the fixed portion, where the elastic member is configured for applying elastic force to the movable portion, so as to maintain the movable portion in the first position, and the movable portion is configured to move from the first position to the second position against the elastic force when internal pressure of the battery cell reaches a threshold, so as to release the internal pressure.

The above description is only a summary of the technical solutions of the present application. In order to understand the technical means in the present application more clearly, it can be implemented in accordance with the content of the specification; and in order to make the above and other objectives, features and characteristics of the present application more obvious and easier to understand, and the specific embodiments of the application are cited below.

### Brief Description of Drawings

In order to illustrate the technical solutions in the embodiments of the present application more clearly, brief description will be made below to the drawings required in the embodiments of the present application. Apparently, the drawings described below are some embodiments of the present application only, and other drawings could be obtained based on these drawings by those of ordinary skill in the art without creative efforts.
FIG. 1 is a schematic structural diagram of a vehicle according to some embodiments of the present application;
FIG. 2 is a schematic diagram of an exploded structure of a battery according to some embodiments of the present application;
FIG. 3 is a schematic diagram of an exploded structure of a battery cell according to some embodiments of the present application;
FIG. 4 is a schematic diagram of an exploded structure of a terminal assembly according to some embodiments of the present application;
FIG. 5 is a schematic diagram of a state in which a movable portion is in a first position according to some embodiments of the present application;
FIG. 6 is a schematic diagram of a state in which the movable portion is in a second position according to some embodiments of the present application;
FIG. 7 is a schematic structural diagram of an insulator according to some embodiments of the present application;
FIG. 8 is a schematic flowchart of a battery cell manufacturing method according to some embodiments of the present application; and
FIG. 9 is a schematic block diagram of a battery cell manufacturing device according to some embodiments of the present application.

The drawings are not drawn to actual scale.

Marking description: 100 - battery; 101 - box body; 1011 - first portion; 1012 - second portion; 1 - battery cell; 11 - shell; 111 - shell body; 112 - first wall; 1121 - mounting hole; 1122 - protrusion; 12 - electrode assembly; 13 - electrode terminal; 131 - fixed portion; 132 - movable portion; 1321 - piston; 1322 - piston rod; 133 - insulator; 1331 - side wall; 1332 - bottom wall; 1333 - first chamber; 1334 - first through hole; 1335 - top cover; 1336 - second chamber; 1337 - second through hole; 14 - connecting member; 15 - elastic member; 16 - breathable film; 17 - pressure relief channel; 171 - first segment; 172 - second segment; 200 - controller; 300 - motor; 1000 - vehicle.

### Detailed Description of Embodiments

Implementations of the present application will be further described below in detail with reference to the drawings and embodiments. The detailed description of the following embodiments and the drawings are used to exemplarily illustrate principles of the present application, but cannot be used to limit the scope of the present application, that is, the present application is not limited to the described embodiments.

Unless otherwise defined, all technological and scientific terms used herein have the same meanings as those commonly understood by those skilled in the art to which the present application belongs. The terms used in the specification of the present application are merely for the purpose of describing specific embodiments, but are not intended to limit the present application. The terms "include" and "have" and any variations thereof in the specification and claims of the present application as well as the brief description of the drawings described above are intended to cover non-exclusive inclusion.

The phrase "embodiment" referred to herein means that specific features, structures, or characteristics described in conjunction with the embodiment may be included in at least one embodiment of the present application. The phrase at various locations in the specification does not necessarily refer to the same embodiment, or an independent or alternative embodiment exclusive of another embodiment. Those skilled in the art understand, in explicit and implicit manners, that an embodiment described herein may be combined with another embodiment.

It should be noted that similar reference signs and letters in the following drawings represent similar terms, so once a term is defined in a drawing, further discussion on this term is not required in the follow-up drawings.

In the description of the present application, it should be understood that the orientations or positional relationships indicated by the terms "center", "length", "width", "thickness", "bottom", "inner", "outer", "circumferential", and the like are based on the orientations or positional relationships shown in the accompanying drawings, are merely intended to facilitate the description of the present application and simplify the description only, but not to indicate or imply that the device or element referred to must have a particular orientation or be constructed and operated in a particular orientation, and therefore, cannot be interpreted as limiting the present application. In addition, the terms "first", "second", and the like in the specification and claims of the present application or the foregoing drawings are used to distinguish different objects, rather than to describe a specific order, and may explicitly or implicitly include one or more of these features. In the description of the present application, unless otherwise specified, "plurality" means two or more.

In the description of the present application, it should be noted that, unless otherwise specified and defined, the terms "mounted", "connected", and "connection" should be generally understood, for example, the "connection" may be a fixed connection, a detachable connection, an integral connection, a mechanical connection, an electrical connection, a direct connection, or a connection through a medium, or a communication of interiors of two elements. Those of ordinary skill in the art may understand the specific meanings of the above terms in the present application according to specific circumstances.

In the present application, battery cells may include lithium-ion secondary batteries, lithium-ion primary batteries, lithium-sulfur batteries, sodium lithium-ion batteries, sodium-ion batteries, magnesium-ion batteries, or the like, which are not limited by the embodiments of the present application.

The battery mentioned in the embodiments of the present application refers to a single physical module that includes one or more battery cells to provide a higher voltage and capacity. For example, the battery mentioned in the present application may include a battery module or a battery pack. The battery generally includes a box body for packaging one or more battery cells. The box body may prevent liquid or other foreign matters from affecting the charging or discharging of the battery cells.

The battery cell includes an electrode assembly and an electrolyte, where the electrode assembly is composed of a positive electrode sheet, a negative electrode sheet, and a separator. The operation of the battery cell mainly relies on the movement of metal ions between the positive electrode sheet and the negative electrode sheet. The positive electrode sheet includes a positive electrode current collector and a positive electrode active material layer. The positive electrode active material layer is coated on a surface of the positive electrode current collector, and the current collector not coated with the positive electrode active material layer protrudes from the current collector coated with the positive electrode active material layer and is used as a positive tab. In an example of a lithium-ion battery, a material of the positive electrode current collector may be aluminum, and a positive electrode active material may be lithium cobalt oxide, lithium iron phosphate, ternary lithium, lithium manganate oxide, or the like. The negative electrode sheet includes a negative electrode current collector and a negative electrode active material layer. The negative electrode active material layer is coated on a surface of the negative electrode current collector, and the current collector not coated with the negative electrode active material layer protrudes from the current collector coated with the negative electrode active material layer and is used as a negative tab. A material of the negative electrode current collector may be copper, and a negative electrode active material may be carbon, silicon, or the like. In order to ensure that no fusing occurs when a large current passes through, there are a plurality of positive tabs which are stacked together and a plurality of negative tabs which are stacked together. A material of the separator may be polypropylene (PP), polyethylene (PE), or the like.

The battery cell further includes an electrode terminal, which is connected with the electrode assembly to export or import electrical energy of the battery cell.

The battery cell further includes a pressure relief structure, which is disposed on the shell. The pressure relief structure refers to an element or component activated to release internal pressure or temperature when the internal pressure or temperature of the battery cell reaches a predetermined threshold.

The development of the battery technology needs to consider many design factors simultaneously, such as energy density, cycle life, discharge capacity, charge and discharge rate, and other performance parameters. In addition, the service life of a battery should also be considered.

The battery includes a plurality of battery cells, which are electrically connected through a current collecting component to form a circuit.

Safety is an important design factor in the manufacturing process of the battery. The battery cell is usually provided with a pressure relief portion, which is actuated to release pressure or temperature inside the battery cell when thermal runaway occurs in the battery cell. In existing technologies, some pressure relief portions can only release pressure but cannot cut off the circuit connecting a plurality of battery cells, while some pressure relief portions disconnect the circuit during pressure relief, but are often deformed during actuation. However, the deformation is irreversible. The battery cell is damaged and cannot continue to be used due to the deformation of the pressure relief portion. As a result, utilization of the battery cell is low, the service life of the battery cell is affected, and the service life of the battery is then affected.

In view of this, in order to solve the problem of short service life of a battery, the inventor designed a battery cell through in-depth research. The battery cell includes a shell, an electrode assembly, and a terminal assembly, where the shell includes a first wall, the electrode assembly is disposed inside the shell, the terminal assembly includes an electrode terminal and an elastic member, the electrode terminal includes a fixed portion for electrical connection with the electrode assembly and a movable portion for electrical connection with a current collecting component, the fixed portion is fixedly disposed on the first wall, the movable portion is movably disposed on the first wall, the movable portion has a first position in contact with the fixed portion and a second position separated from the fixed portion, and the elastic member is used for applying elastic force to the movable portion to maintain the movable portion in the first position; and the movable portion is configured to move from the first position to the second position against the elastic force when internal pressure of the battery cell reaches a threshold, so as to release the internal pressure. The electrode terminal includes the movable portion and the fixed portion, where the movable portion can be separated from the fixed portion in a case of thermal runaway in the battery cell to release the internal pressure. When the internal pressure is less than the elastic force, the movable portion moves to contact the fixed portion under the elastic force of the elastic member, so that the battery cell works normally, safety and utilization of the battery cell are improved, and a service life of the battery cell is prolonged.

In such a battery cell, the movable portion is split from the fixed portion, and the movable portion is movably disposed on the first wall. When the thermal runaway occurs in the battery cell, gas generated by thermo-chemical reactions of the electrode assembly increases the internal pressure of the battery cell, and the high-pressure gas can drive the movable portion to move from the first position to the second position against the elastic force applied to the movable portion by the elastic member, so that the movable portion is separated from the fixed portion, the internal pressure of the battery cell is released, and a connection between the battery cell and an external circuit is cut off. When the internal pressure of the battery cell decreases to be less than the elastic force applied to the movable portion by the elastic member, the movable portion moves towards the first position under the elastic force of the elastic member. When the movable portion is in the first position, the movable portion is electrically connected to the fixed portion, so that the battery cell continues to work, the safety and utilization of the battery cell are improved, the service life of the battery cell is prolonged, and a battery including the battery cells has a long service life.

The battery cell disclosed in the embodiments of the present application may be used, but is not limited to, in a power consumption device such as a vehicle, a ship, or an aircraft. A power supply system of the power consumption device may be composed of the battery cell, the battery, and the like disclosed in the present application.

An embodiment of the present application provides a power consumption device using a battery as a power supply. The power consumption device may be, but is not limited to, a mobile phone, a tablet computer, a laptop computer, an electric toy, an electric tool, an electric bicycle, an electric motorcycle, an electric vehicle, a ship, a spacecraft, or the like. The electric toy may include fixed or mobile electric toys, such as game consoles, electric vehicle toys, electric ship toys and electric aircraft toys, and the spacecraft may include airplanes, rockets, space shuttles, spaceships, and the like.

For convenient description, the following embodiments are described by an example of a vehicle 1000 as a power consumption device in an embodiment of the present application.

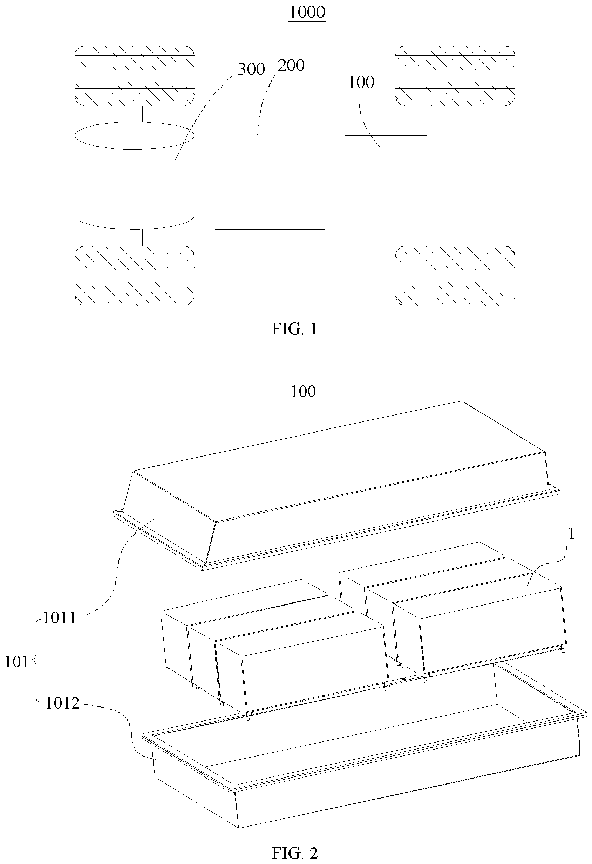

Refer to FIG. 1. FIG. 1 is a schematic structural diagram of a vehicle 1000 according to some embodiments of the present application. The vehicle 1000 may be a fuel-powered vehicle, a gas-powered vehicle or a new energy vehicle, and the new energy vehicle may be a battery electric vehicle, a hybrid vehicle, an extended-range vehicle, or the like. A battery 100 is provided inside the vehicle 1000. The battery 100 may be disposed at the bottom, head or tail of the vehicle 1000. The battery 100 may be used for supplying power to the vehicle 1000. For example, the battery 100 may be used as an operation power supply of the vehicle 1000 and is used for a circuit system of the vehicle 1000, for example, for a working power demand of the vehicle 1000 during startup, navigation and running.

The vehicle 1000 may further include a controller 200 and a motor 300. The controller 200 is used for controlling the battery 100 to supply power to the motor 300, for example, for the working power demand of the vehicle 1000 during startup, navigation and running.

In some embodiments of the present application, the battery 100 may be used not only as an operation power supply of the vehicle 1000, but also as a driving power supply of the vehicle 1000 to replace or partially replace fuel or natural gas to provide driving power for the vehicle 1000.

Refer to FIG. 2. FIG. 2 is a schematic diagram of an exploded structure of the battery 100 according to some embodiments of the present application. The battery 100 includes a box body 101 and a battery cell 1, where the battery cell 1 is accommodated in the box body 101. The box body 101 is used for providing an accommodating space for the battery cell 1, and the box body 101 may have various structures. In some embodiments, the box body 101 may include a first portion 1011 and a second portion 1012, the first portion 1011 and the second portion 1012 cover each other, and the first portion 1011 and the second portion 1012 jointly confine the accommodating space for accommodating the battery cell 1. The second portion 1012 may be of a hollow structure with an opening at one end, the first portion 1011 may be of a plate-like structure, and the first portion 1011 covers an opening side of the second portion 1012, so that the first portion 1011 and the second portion 1012 jointly confine the accommodating space. Alternatively, both the first portion 1011 and the second portion 1012 may be of a hollow structure with an opening on one side, and the opening side of the first portion 1011 covers the opening side of the second portion 1012.

In the battery 100, there may be a plurality of battery cells 1. The plurality of battery cells 1 may be connected in series, parallel, or series and parallel. The series and parallel connection refers to both series and parallel connection in the plurality of battery cells 1. The plurality of battery cells 1 may be directly connected in series, parallel, or series and parallel together, and then the whole composed of the plurality of battery cells 1 is accommodated in the box body 101. Alternatively, the plurality of battery cells 1 may be first connected in series, parallel, or series and parallel to form a battery module in the battery 100, and then a plurality of battery modules may be connected in series, parallel, or series and parallel to form a whole accommodated in the box body 101. The battery 100 may further include other structures. For example, the battery 100 may further include a current collecting component for implementing an electrical connection between the plurality of battery cells 1.

Each battery cell 1 may be a secondary battery, a primary battery, a lithium-sulfur battery, a sodium-ion battery, or a magnesium-ion battery, but is not limited thereto. The battery cell 1 provided in the embodiments of the present application is square.

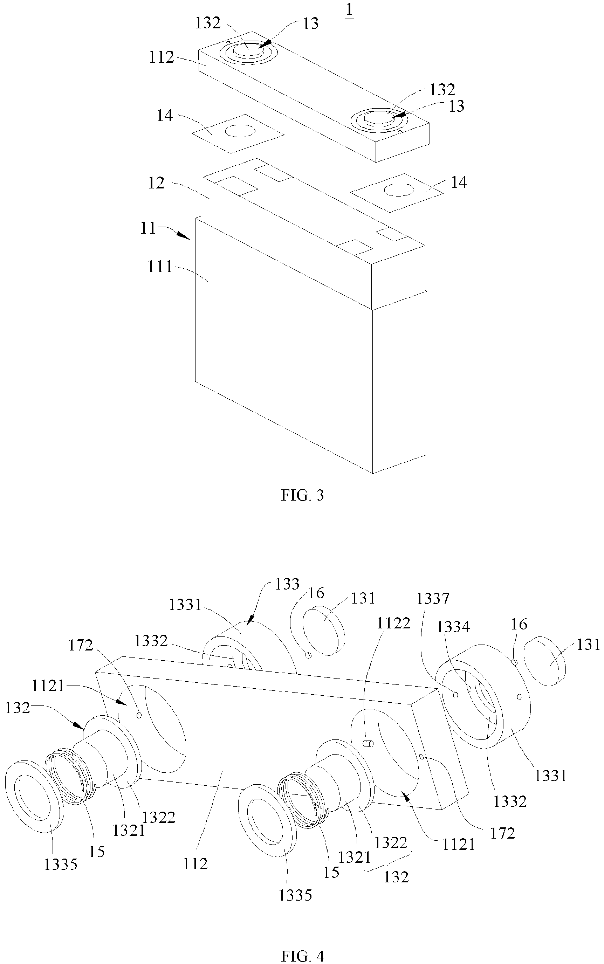

Refer to FIG. 3. FIG. 3 is a schematic diagram of an exploded structure of the battery cell 1 according to some embodiments of the present application. The battery cell 1 refers to a minimum unit that forms the battery 100. As shown in FIG. 3, the battery cell 1 includes a shell 11, an electrode assembly 12, a terminal assembly, a connecting member 14, and other functional components.

The shell 11 is a component used for forming an internal environment of the battery cell 1, and the formed internal environment may be used for accommodating the electrode assembly 12, an electrolyte, and other components. The shell 11 may include a shell body 111 and an end cover 112. The shell body 111 and the end cover 112 may be independent components. Alternatively, the shell body 111 is provided with an opening, and the end cover 112 covers the opening to form the internal environment of the battery cell 1. Unlimitedly, the end cover 112 and the shell body 111 may be integrated. Specifically, the end cover 112 and the shell body 111 may form a common connection surface before other components are put in the shell. When the interior of the shell body 111 is required to be encapsulated, the end cover 112 is closed to the shell body 111. The shell body 111 may be cuboid. Specifically, a shape of the shell body 111 may be determined according to a specific shape and size of the electrode assembly 12. A material of the shell body 111 may be various, such as copper, iron, aluminum, stainless steel, aluminum alloy, or plastic, and is not specially limited in the embodiments of the present application.

The end cover 112 refers to a component that is closed to the opening of the shell body 111 to isolate the internal environment of the battery cell 1 from an external environment. Unlimitedly, a shape of the end cover 112 may adapt to that of the shell body 111 to fit the shell body 111. Optionally, the end cover 112 may be made of a material with certain hardness and strength (such as aluminum alloy). In this case, the end cover 112 is less prone to deformation during extrusion and collision, so that the battery cell 1 can have higher structural strength and its safety performance can be improved. Functional components such as an electrode terminal 13 may be disposed on the end cover 112. The electrode terminal 13 may be used for electrical connection with the electrode assembly 12 to output or input electrical energy of the battery cell 1. In some embodiments, a pressure relief mechanism may be further disposed on the end cover 112 to release internal pressure when the internal pressure or temperature of the battery cell 1 reaches a threshold. A material of the end cover 112 may be various, such as copper, iron, aluminum, stainless steel, aluminum alloy, or plastic, and is not specially limited in the embodiments of the present application. In some embodiments, an insulator may alternatively be disposed on an inner side of the end cover 112, and the insulator may be used for isolating electrical connection components inside the shell body 111 from the end cover 112 to reduce the risk of a short circuit. For example, the insulator may be plastic, rubber, or the like.

The electrode assembly 12 is a component that undergoes electrochemical reactions in the battery cell 1. The shell body 111 may include one or more electrode assemblies 12. In implementations of the present application, the electrode assembly 12 is mainly formed by coiling or stacking a positive electrode sheet and a negative electrode sheet, and a separator is usually disposed between the positive electrode sheet and the negative electrode sheet, where the separator is used for insulating and isolating the positive electrode sheet and the negative electrode sheet. Portions of the positive electrode sheet and the negative electrode sheet with active materials form a main body of the electrode assembly 12, while portions of the positive electrode sheet and the negative electrode sheet without active materials form respective tabs. The positive electrode tab and the negative electrode tab may be located at one end of the main body together or at two ends of the main body separately. In charging and discharging processes of the battery, the positive electrode active material and the negative electrode active material react with an electrolyte, and the tabs are connected to the electrode terminals 13 through connecting members 14 to form a current circuit.

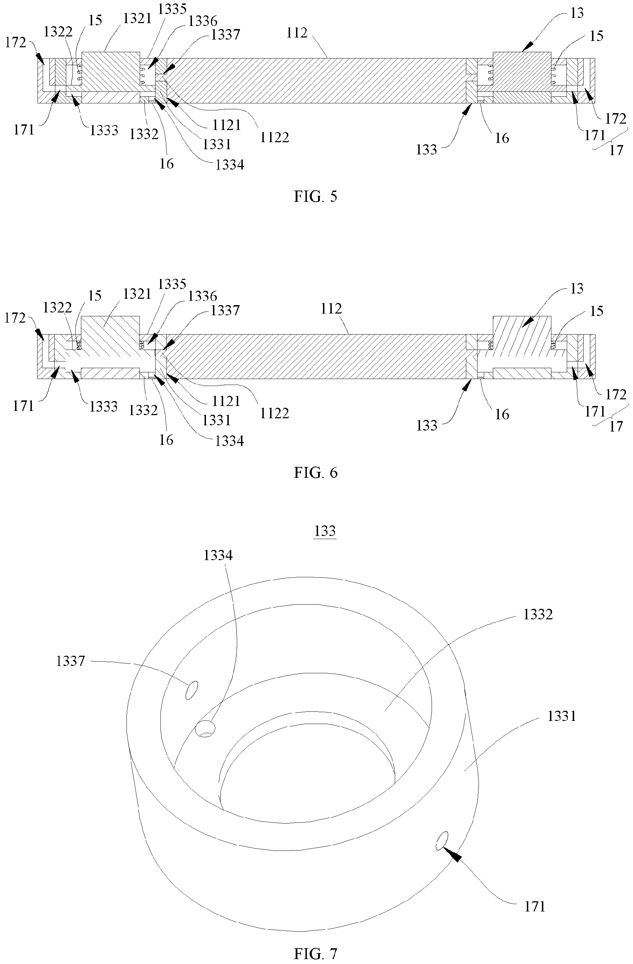

Refer to FIG. 4 to FIG. 6, where FIG. 4 is a schematic diagram of an exploded structure of a terminal assembly according to some embodiments of the present application, FIG. 5 is a schematic diagram of a state in which a movable portion 132 is in a first position according to some embodiments of the present application, and FIG. 6 is a schematic diagram of a state in which the movable portion 132 is in a second position according to some embodiments of the present application. According to some embodiments of the present application, the present application provides a battery cell 1. As shown in FIG. 3 and FIG. 4, the battery cell 1 includes a shell 11, an electrode assembly 12, and a terminal assembly. The shell 11 includes a first wall 112, and the electrode assembly 12 is disposed inside the shell 11. The terminal assembly includes an electrode terminal 13 and an elastic member 15, the electrode terminal 13 includes a fixed portion 131 for electrical connection with the electrode assembly 12 and a movable portion 132 for electrical connection with a current collecting component, the fixed portion 131 is fixedly disposed on the first wall 112, the movable portion 132 is movably disposed on the first wall 112, the movable portion 132 has a first position in contact with the fixed portion 131 and a second position separated from the fixed portion 131, the elastic member 15 is used for applying elastic force to the movable portion 132 to maintain the movable portion 132 in the first position, where the movable portion 132 is configured to move from the first position to the second position against the elastic force when internal pressure of the battery cell 1 reaches a threshold, so as to release the internal pressure.

The first wall 112 is a portion of the shell 11, and is used for mounting and positioning the electrode terminal 13 to facilitate the connection between the electrode terminal 13 and the current collecting component.

The electrode terminal 13 is a component for implementing the electrical connection between the electrode assembly 12 and the current collecting component, and is used for outputting or inputting electrical energy of the battery cell 1. The movable portion 132 is a portion of the electrode terminal 13 for electrical connection with the current collecting component, and the fixed portion 131 is a portion of the electrode terminal 13 for electrical connection with the current collecting component. When the movable portion 132 is in contact with the fixed portion 131 to conduct electricity, the battery cell 1 can be electrically connected to other battery cells 1 through the current collecting component to form an external circuit.

The first position and the second position are two positions of the movable portion 132 in a thickness direction of the first wall 112.

As shown in FIG. 5, the first position refers to a position where the movable portion 132 is in contact with the fixed portion 131. In this case, the movable portion 132 is in contact with the fixed portion 131 to conduct electricity, whereby the electrical energy of the battery cell 1 can be output or input.

As shown in FIG. 6, the second position refers to a position where the movable portion 132 is separated from the fixed portion 131. In this case, the movable portion 132 is separated from the fixed portion 131, the battery cell 1 is disconnected from the external circuit.

The elastic member 15 is a component that provides the elastic force to the movable portion 132 to maintain the movable portion 132 in the first position. The elastic member 15 may be a spring, rubber, or the like. Optionally, the elastic member 15 is a spring with good elastic force.

The movable portion 132 is configured to move from the first position to the second position against the elastic force when the internal pressure of the battery cell 1 reaches the threshold, so as to release the internal pressure. That is, when thermal runaway occurs in the battery cell 1, the internal pressure of the battery cell 1 increases; when the internal pressure reaches and exceeds the threshold, the internal pressure overcomes the elastic force and drives the movable portion 132 to move from the first position to the second position; and after the movable portion 132 is separated from the fixed portion 131, the internal pressure can be released to the outside of the battery cell 1. The threshold refers to a preset pressure value, and the threshold varies according to different design requirements. The threshold depends on a pressure value at which elastic deformation occurs in the elastic member 15. When the internal pressure reaches the threshold, the elastic member 15 cannot maintain the movable portion 132 in the first position. When the internal pressure exceeds the threshold, the elastic member 15 is compressed and deformed, and the internal pressure drives the movable portion 132 to move from the first position to the second position. When the elastic member 15 is compressed to a limit position, the internal pressure cannot drive the movable portion 132 to continue extruding the elastic member 15, and the distance between the movable portion 132 and the fixed portion 131 is fixed.

In the battery cell 1 according to the embodiments of the present application, the movable portion 132 is split from the fixed portion 131, and the movable portion 132 is movably disposed on the first wall 112. When the thermal runaway occurs in the battery cell 1, gas generated by electrochemical reactions of the electrode assembly 12 increases the internal pressure of the battery cell 1, and the high-pressure gas can drive the movable portion 132 to move from the first position to the second position against the elastic force applied to the movable portion 132 by the elastic member 15, so that the movable portion 132 is separated from the fixed portion 131, the internal pressure of the battery cell 1 is released, and a connection between the battery cell 1 and an external circuit is cut off. When the internal pressure of the battery cell 1 decreases to be less than the elastic force applied to the movable portion 132 by the elastic member 15, the movable portion 132 moves towards the first position under the elastic force of the elastic member 15. When the movable portion 132 is in the first position, the movable portion 132 is electrically connected to the fixed portion 131, so that the battery cell 1 continues to work, the safety and utilization of the battery cell 1 are improved, the service life of the battery cell 1 is prolonged, and a battery including the battery cells 1 has a long service life.

According to some embodiments of the present application, optionally, the fixed portion 131 is insulated and isolated from the first wall 112, the movable portion 132 in the first position is insulated and isolated from the first wall 112, and the movable portion 132 in the second position is in contact with the first wall 112 to conduct electricity.

In the embodiments of the present application, the first wall 112 may be a conductive component.

The fixed portion 131 is insulated and isolated from the first wall 112, so that the electrical energy cannot be transmitted between the fixed portion 131 and the first wall 112.

The movable portion 132 in the first position is insulated and isolated from the first wall 112, and the movable portion 132 in the second position is in contact with the first wall 112 to conduct electricity, so that when the movable portion 132 is in contact with the fixed portion 131 to conduct electricity, the electrode terminal 13 is insulated from the first wall 112, and the electrical energy cannot be transmitted between the electrode terminal 13 and the first wall 112; and when the movable portion 132 is separated from the fixed portion 131, the movable portion 132 is in contact with the first wall 112 to conduct electricity, and the electrical energy can be transmitted between the movable portion 132 and the first wall 112.

The movable portion 132 in the second position is in contact with the first wall 112 to conduct electricity, so as to short-circuit the battery cell 1. The circuit of the battery including the battery cells 1 is in a connected state, without affecting normal operation of the battery.

Refer to FIG. 7. FIG. 7 is a schematic structural diagram of an insulator 133 according to some embodiments of the present application. According to some embodiments of the present application, alternatively, as shown in FIG. 4 to FIG. 7, the terminal assembly further includes an insulator 133, and the insulator 133 is fixed to the first wall 112, where the fixed portion 131 is fixed to the insulator 133, and the movable portion 132 is movably disposed on the insulator 133.

The insulator 133 is an electrical insulation component. For example, the insulator 133 may be made of rubber or plastic (such as polyethylene terephthalate (PET) or polypropylene (PP)).

The insulator 133 is fixed to the first wall 112, indicating that the insulator 133 is mounted on the first wall 112 and fixed relative to the first wall 112. For example, the insulator 133 may be bonded to the first wall 112 through an adhesive, or connected by clamping, embedding, or the like.

The fixed portion 131 is fixed to the insulator 133, indicating that the fixed portion 131 is mounted on the insulator 133 and fixed relative to the insulator 133. The fixed portion 131 is disposed on the insulator 133, the fixed portion 131 may be in contact with the first wall 112 to conduct electricity, and the fixed portion 131 may alternatively be insulated and isolated from the first wall 112 through the insulator 133. Optionally, the fixed portion 131 is insulated and isolated from the first wall 112 through the insulator 133.

The movable portion 132 is movably disposed on the insulator 133, indicating that the movable portion 132 can move relative to the insulator 133, that is, the movable portion 132 is in sliding fit with the insulator 133, and the movable portion 132 can move from the first position to the second position relative to the insulator 133, or the movable portion 132 can move from the second position to the first position relative to the insulator 133.

In the embodiment where the fixed portion 131 is insulated and isolated from the first wall 112, the movable portion 132 in the first position is insulated and isolated from the first wall 112, and the movable portion 132 in the second position is in contact with the first wall 112 to conduct electricity, the fixed portion 131 is insulated and isolated from the first wall 112 through the insulator 133, and the movable portion 132 in the first position is insulated and isolated from the first wall 112 through the insulator 133.

The insulator 133 serves as a mounting base for the fixed portion 131 and the movable portion 132 to assemble the fixed portion 131 and the movable portion 132. The fixed portion 131 and the movable portion 132 may be insulated and isolated from the first wall 112 through the insulator 133.

According to some embodiments of the present application, alternatively, as shown in FIG. 4 to FIG. 7, the first wall 112 is provided with a mounting hole 1121, and the insulator 133 is disposed inside the mounting hole 1121.

The mounting hole 1121 is a hole formed on the first wall 112 for mounting the insulator 133.

The insulator 133 is disposed inside the mounting hole 1121 to assemble the insulator 133 with the first wall 112, so as to realize cooperation of the fixed portion 131 and the movable portion 132 with the first wall 112.

According to some embodiments of the present application, alternatively, as shown in FIG. 4 to FIG. 7, the insulator 133 includes a cylinder, an outer circumferential surface of the cylinder is connected to a wall of the mounting hole 1121, the movable portion 132 is movably disposed inside the cylinder in an axial direction of the cylinder and is in sealing fit with an inner circumferential surface of the cylinder, the fixed portion 131 is fixed to the cylinder, and the fixed portion 131 is located on a side, close to the interior of the battery cell 1, of the movable portion 132 in the axial direction of the cylinder.

The cylinder has a central axis and a regular cross section perpendicular to the central axis, for example, the cylinder may be cylindrical. The cylinder is of an internally hollow structure with at least one end opened to facilitate disposal of the movable portion inside the cylinder.

The outer circumferential surface of the cylinder is connected to the wall of the mounting hole 1121, which may be considered that the outer circumferential surface of the cylinder is bonded to the wall of the mounting hole 1121 by an adhesive, or the outer circumferential surface of the cylinder is in interference fit with the wall of the mounting hole 1121.

The movable portion 132 is movably disposed inside the cylinder in the axial direction of the cylinder, and the movable portion 132 is movable relative to the cylinder in the axial direction of the cylinder. The cylinder may be a cylindrical body, and the axial direction of the cylinder refers to an extension direction of the central axis of the cylinder.

The movable portion 132 is in sealing fit with the inner circumferential surface of the cylinder, that is, when the movable portion 132 moves relative to the cylinder in the axial direction of the cylinder, the movable portion 132 is always in sealing fit with the inner circumferential surface of the cylinder.

The fixed portion 131 is located on the side, close to the interior of the battery cell 1, of the movable portion 132 to facilitate the electrical connection between the fixed portion 131 and the electrode assembly 12.

The outer circumferential surface of the cylinder is connected to the wall of the mounting hole 1121 to ensure a large contact area between the insulator 133 and the first wall 112, and there is a space for the movable portion 132 to move inside the cylinder. The movable portion 132 is in sealing fit with the inner circumferential surface of the cylinder, so that when thermal runaway occurs inside the battery cell 1, the gas inside the battery cell 1 can drive the movable portion 132 to move in the axial direction of the cylinder.

According to some embodiments of the present application, alternatively, as shown in FIG. 4 to FIG. 7, the cylinder includes a side wall 1331 and a bottom wall 1332, the side wall 1331 is disposed at a periphery of the bottom wall 1332, the fixed portion 131 penetrates the bottom wall 1332, the movable portion 132 is in sealing fit with an inner circumferential surface of the side wall 1331, a first chamber 1333 is formed between the movable portion 132 and the bottom wall 1332, and the bottom wall 1332 or the fixed portion 131 is provided with a first through hole 1334 for connecting the interior of the battery cell 1 and the first chamber 1333.

The side wall 1331 is disposed at the periphery of the bottom wall 1332, the side wall 1331 and the bottom wall 1332 enclose the chamber for accommodating the movable portion 132, and the movable portion 132 is in sealing fit with the inner circumferential surface of the side wall 1331 to ensure stable movement of the movable portion 132 relative to the cylinder.

Optionally, the side wall 1331 and the bottom wall 1332 are integrally formed for easy machining.

The bottom wall 1332 or the fixed portion 131 is provided with the first through hole 1334 for connecting the interior of the battery cell 1 and the first chamber 1333, where the first through hole 1334 may be disposed on the bottom wall 1332, or the first through hole 1334 may be disposed on the fixed portion 131. Optionally, the first through hole 1334 is disposed on the bottom wall 1332 to facilitate machining and ensure a large connection area between the fixed portion 131 and the movable portion 132.

The movable portion 132 is in sealing fit with the inner circumferential surface of the side wall 1331, the first chamber 1333 is formed between the bottom wall 1332 and the movable portion 132, the first chamber 1333 is in communication with the interior of the battery cell 1, and the gas inside the battery cell 1 can enter the first chamber 1333 to drive the movable portion 132 to move, so that the movable portion 132 can move to the second position and the movable portion 132 can be separated from the fixed portion 131.

According to some embodiments of the present application, optionally, a breathable film 16 is disposed at the first through hole 1334.

The breathable film 16 is a component for keeping gas flowing and blocking dust and liquid (such as water or electrolyte). The breathable film 16 is disposed at the first through hole 1334, which can limit entry of an electrolyte into the first chamber 1333 and avoid the influence of the electrolyte on the movement of the movable portion 132 relative to the cylinder, so as to ensure flexible and stable movement of the movable portion 132 relative to the cylinder.

Optionally, the breathable film 16 is disposed at an end, close to the electrode assembly 12, of the first through hole 1334 to avoid the entry of the electrolyte into the first through hole 1334 and prevent electrolyte crystallization from blocking the first through hole 1334.

According to some embodiments of the present application, optionally, as shown in FIG. 4 to FIG. 6, the insulator 133 further includes a top cover 1335, the top cover 1335 covers an end, away from the interior of the battery cell 1, of the cylinder, the movable portion 132 includes a piston 1321 and a piston rod 1322, the piston 1321 is movably disposed inside the cylinder and is in sealing fit with the inner circumferential surface of the cylinder, one end of the piston rod 1322 is connected to the piston 1321, and the other end passes through the top cover 1335 for connecting the current collecting component.

The top cover 1335 is a cover plate used for covering the end, away from the interior of the battery cell 1, of the cylinder. The top cover 1335 is connected to the cylinder to cover the opening at the end, away from the interior of the battery cell 1, of the cylinder. The top cover 1335 is provided with a hole through which the piston rod 1322 passes, so that an end, away from the piston 1321, of the piston rod 1322 is connected to the current collecting component after passing through the top cover 1335. A second chamber 1336 is formed between the top cover 1335 and the piston 1321, and the second chamber 1336 may be a sealed chamber to prevent impurities from entering the second chamber 1336 to affect the sealing fit between the piston 1321 and the inner circumferential surface of the cylinder; alternatively, the second chamber 1336 may be a non-sealed chamber, that is, the connection between the top cover 1335 and the cylinder does not need to be sealed, which reduces assembly difficulty, as long as the opening at the end, away from the interior of the battery cell 1, of the cylinder is covered by means of the connection between the top cover 1335 and the cylinder.

The top cover 1335 may be connected to the cylinder in many ways, such as hot melting connection or adhesive bonding.

Because the piston rod 1322 is required to pass through the top cover 1335, when an outer surface of the top cover 1334 protrudes from an end face of the cylinder, an overall height of the battery cell 1 will be increased for the electrical connection between the piston rod 1322 and the current collecting component. Optionally, the top cover 1335 is disposed inside the cylinder, the top cover 1335 is connected to the inner circumferential surface of the cylinder, and the outer surface of the top cover 1335 is coplanar with the end face of the cylinder, so as to prevent the top cover 1335 from protruding to affect the assembly height of the battery cell 1.

It should be pointed out that the inner circumferential surface of the cylinder refers to a surface disposed around the central axis of the cylinder and enclosing an internal space of the cylinder. For example, the inner circumferential surface of the cylinder may be an inner surface of the side wall 1331.

When the movable portion 132 is in the first position, the piston 1321 is in contact with the fixed portion 131 to conduct electricity; and when the movable portion 132 is in the second position, the piston 1321 is separated from the fixed portion 131.

One end of the piston rod 1322 is connected to the piston 1321, and the other end passes through the top cover 1335. A central axis of the piston rod 1322 is collinear with the central axis of the cylinder and also collinear with a central axis of the piston 1321 to ensure stable movement of the piston 1321 relative to the cylinder.

The top cover 1335 covers the end, away from the interior of the battery cell 1, of the cylinder, which can protect the piston 1321 and prevent impurities from entering the cylinder to affect the sliding fit between the piston 1321 and the cylinder.

According to some embodiments of the present application, alternatively, as shown in FIG. 5 and FIG. 6, the elastic member 15 is sleeved on the piston rod 1322, one end of the elastic member 15 abuts against the piston 1321, and the other end abuts against the top cover 1335.

The elastic member 15 is sleeved on the piston rod 1322, that is, the piston rod 1322 is inserted into the elastic member 15, and the piston rod 1322 guides the elastic member 15 to limit skewing of the elastic member 15 in expansion and contraction processes.

One end of the elastic member 15 abuts against the piston 1321, the other end abuts against the top cover 1335, and the elastic member 15 is compressed to provide movement for the piston 1321 away from the top cover 1335, so that the movable portion 132 is maintained in the first position.

The elastic member 15 is sleeved on the piston rod 1322 to ensure that the elastic force applied by the elastic member 15 to the movement is balanced, and to ensure the stable movement of the piston 1321 relative to the cylinder.

According to some embodiments of the present application, alternatively, as shown in FIG. 5 and FIG. 6, the battery cell 1 further includes: a pressure relief channel 17, where one end of the pressure relief channel 17 extends to the inner circumferential surface of the cylinder; when the movable portion 132 is in the first position, the movable portion 132 seals one end of the pressure relief channel 17 to disconnect the pressure relief channel 17 from the interior of the battery cell 1; and when the movable portion 132 is in the second position, the movable portion 132 opens one end of the pressure relief channel 17 to connect the pressure relief channel 17 with the interior of the battery cell 1.

The pressure relief channel 17 is a channel used for discharging the internal pressure of the battery cell 1, and one end of the pressure relief channel 17 extends to the inner circumferential surface of the cylinder, so that the pressure relief channel 17 can be in communication with the interior of the battery cell 1 through the cylinder. The other end of the pressure relief channel 17 is in communication with an external environment, so that the pressure relief channel 17 connects the interior and exterior of the battery cell 1.

When the movable portion 132 is in the first position, the movable portion 132 seals the end, in communication with the interior of cylinder, of the pressure relief channel 17 to disconnect the pressure relief channel 17 from the interior of the battery cell 1 and isolate the interior and exterior of the battery cell 1. When the movable portion 132 is in the second position, the movable portion 132 opens the end, in communication with the interior of cylinder, of the pressure relief channel 17 to connect the pressure relief channel 17 with the interior of the battery cell 1, so that the interior and exterior of the battery cell 1 are connected to release the inner pressure of the battery cell 1.

In order to ensure normal operation of the battery cell 1 when thermal runaway does not occur, there is a certain distance between the first position and the second position in the thickness direction of the first wall 112, that is, the movable portion 132 is insulated and isolated from the first wall 112 when the movable portion 132 moves from the first position to the second position. That is, after the movable portion 132 leaves the first position and before arriving at the second position, one end of the pressure relief channel 17 is fully opened, and in this case, the movable portion 132 is insulated and isolated from the first wall 112. Only after the movable portion 132 fully arrives at the second position, the movable portion 132 is in contact with the first wall 112 to conduct electricity.

Because the pressure relief channel 17 connects internal and external environments of the battery cell 1, when the movable portion 132 moves towards the second position, the pressure relief channel 17 is gradually opened, and the pressure inside the battery cell 1 is released through the pressure relief channel 17, whereby the pressure relief action of the battery cell 1 is implemented.

According to some embodiments of the present application, alternatively, as shown in FIG. 4 to FIG. 7, the pressure relief channel 17 includes a first segment 171 and a second segment 172 in communication with each other, the first segment 171 is disposed on the cylinder, and the second segment 172 is disposed on the first wall 112.

The first segment 171 and the second segment 172 are two portions of the pressure relief channel 17, the first segment 171 is disposed on the cylinder and penetrates the side wall 1331 of the cylinder to connect the interior of the cylinder with the second segment 172; and the second segment 172 is disposed on the first wall 112 and penetrates the first wall 112 to connect the first segment 171 with the exterior. One end of the second segment 172 is in communication with the mounting hole 1121, and the other end is disposed on a side, away from the interior of the battery cell 1, of the first wall 112 to facilitate the discharge of gas inside the battery cell 1.

In other embodiments, an end, away from the mounting hole 1121, of the second segment 172 may alternatively be disposed on a side surface of the first wall 112. The surface, facing the interior of the battery cell 1, of the first wall 112 is a first surface, and the surface, away from the interior of the battery cell 1, of the first wall 112 is a second surface. The side surface of the first wall 112 refers to a surface of the first wall 112 for connecting the first surface and the second surface, as long as the gas inside the battery cell 1 can be discharged.

The first segment 171 is disposed on the cylinder, the second segment 172 is disposed on the first wall 112, and the first segment 171 is in communication with the second segment 172 to connect the pressure relief channel 17 with the first chamber 1333 and the external environment, so as to release the pressure inside the battery cell 1 to the external environment.

According to some embodiments of the present application, optionally, the side wall 1331 is provided with a second through hole 1337, a protrusion 1122 is formed on the wall of the mounting hole 1121, the protrusion 1122 extends into the second through hole 1337, and the movable portion 132 is in contact with the protrusion 1122 to conduct electricity when the movable portion 132 is in the second position.

The protrusion 1122 is formed on the wall of the mounting hole 1121 and protrudes from the wall of the mounting hole 1121. The protrusion 1122 extends into the second through hole 1337, and an end face, away from the wall of the mounting hole 1121, of the protrusion 1122 is flush with the inner surface of the side wall 1331, so that the movable portion 132 can be in contact with the protrusion 1122 to conduct electricity when the movable portion 132 is in the second position.

The protrusion 1122 may be in any shape, such as cylindrical, prismatic, or irregular. Optionally, the protrusion 1122 is cylindrical for easy manufacturing.

When the movable portion 132 is in the second position, the movable portion 132 is electrically connected to the first wall 112. In a battery including a plurality of battery cells 1, when thermal runaway occurs in a battery cell 1 and the movable portion 132 of the battery cell 1 is in the second position, the movable portion 132 of the battery cell 1 conducts electricity with the first wall 112 to short-circuit the interior of the battery cell 1, while the circuit of the entire battery remains open, so the battery cell 1 has a little impact on the whole battery and normal operation of the battery can be guaranteed.

According to some embodiments of the present application, optionally, as shown in FIG. 3 to FIG. 7, there are two terminal assemblies, and the electrode terminals 13 of the two terminal assemblies have opposite polarities.

There are two terminal assemblies, and the electrode terminals 13 of the two terminal assemblies are a positive electrode terminal 13 and a negative electrode terminal 13, respectively. The positive electrode terminal 13 and the negative electrode terminal 13 have the same structure for easy manufacturing.

Because there are two terminal assemblies with opposite polarities, when thermal runaway occurs in the battery cell 1, the movable portion 132 moves to the second position to release the pressure inside the battery cell 1 in a timely manner. In the embodiment where the movable portion 132 in the second position can be electrically connected to the first wall 112, when the movable portion 132 is in the second position, the battery cell 1 can be internally short-circuited, so in the battery including a plurality of battery cells 1, the circuit of the entire battery can be kept open to ensure normal operation of the battery.

According to some embodiments of the present application, optionally, as shown in FIG. 3, the shell 11 includes a shell body 111 and an end cover, the shell body 111 has an opening, the end cover is used for covering the opening, and the first wall 112 is the end cover.

The first wall 112 is the end cover, and the end cover is separated from the shell body 111 to facilitate manufacturing and implement assembly of the battery cell 1.

The description of each component in the battery cell 1 may be referenced to the foregoing embodiments. For simplicity, details will not be repeated here.

According to some embodiments of the present application, the present application further provides a battery 100, including the battery cell 1 described in any of the foregoing solutions.

According to some embodiments of the present application, the present application further provides a power consumption device, including the battery 100 described in any of the foregoing solutions, where the battery 100 is used for providing electrical energy to the power consumption device.

The power consumption device may be any of the foregoing devices or systems using the battery 100.

According to some embodiments of the present application, as shown in FIG. 3 to FIG. 7, the present application provides a battery cell 1. The battery cell 1 includes a shell 11, an electrode assembly 12, and a terminal assembly. The shell 11 includes a shell body 111 and an end cover, the shell body 111 has an opening covered by the end cover, the end cover is a first wall 112, and the first wall 112 is provided with a mounting hole 1121. The electrode assembly 12 is disposed inside the shell body 111. The terminal assembly includes an electrode terminal 13 and an elastic member 15, where the electrode terminal 13 includes a fixed portion 131 for electrical connection with the electrode assembly 12 and a movable portion 132 for electrical connection with a current collecting component. The fixed portion 131 is fixedly disposed on the first wall 112, the movable portion 132 is movably disposed on the first wall 112, the movable portion 132 has a first position in contact with the fixed portion 131 and a second position separated from the fixed portion 131, and the elastic member 15 is used for applying elastic force to the movable portion 132 to maintain the movable portion 132 in the first position. The battery cell 1 further includes an insulator 133, a top cover 1335, and a pressure relief channel 17, where the insulator 133 includes a cylinder, an outer circumferential surface of the cylinder is connected to a wall of the mounting hole 1121, the cylinder includes a bottom wall 1332 and a side wall 1331, the side wall 1331 is disposed at a periphery of the bottom wall 1332, the fixed portion 131 penetrates the bottom wall 1332, the top cover 1335 covers an end, away from the interior of the battery cell 1, of the cylinder, the top cover 1335 is opposite to the bottom wall 1332, the movable portion 132 includes a piston 1321 and a piston rod 1322, the piston 1321 is movably disposed inside the cylinder and is in sealing fit with an inner circumferential surface of the side wall 1331, a first chamber 1333 is formed between the piston 1321 and the bottom wall 1332, one end of the piston rod 1322 is connected to the piston 1321, and the other end of the piston rod 1322 passes through the top cover 1335 and is connected to the current collecting component. The movable portion 132 has the first position in contact with the fixed portion 131 and the second position separated from the fixed portion 131, and the piston 1321 can move relative to the cylinder in an axial direction of the cylinder to switch the movable portion 132 between the first position and the second position. The elastic member 15 is sleeved on the piston rod 1322, one end of the elastic member 15 abuts against the piston 1321 and the other end abuts against the top cover 1335, and the elastic member 15 applies elastic force to the piston 1321 to maintain the movable portion 132 in the first position. The pressure relief channel 17 includes a first segment 171 and a second segment 172, the first segment 171 is disposed on the cylinder, the second segment 172 is disposed on the first wall 112, one end of the pressure relief channel 17 is in communication with an interior of the cylinder, and the other end of the pressure relief channel 17 is in communication with an exterior. When the movable portion 132 is in the first position, the piston 1321 seals the end, in communication with the interior of cylinder, of the pressure relief channel 17 to disconnect the pressure relief channel 17 from the interior of the battery cell 1; and when the movable portion 132 is in the second position, the piston 1321 opens the end, in communication with the interior of cylinder, of the pressure relief channel 17 to connect the pressure relief channel 17 with the interior of the battery cell 1. The movable portion 132 is configured to move from the first position to the second position against the elastic force provided by the elastic member 15 when internal pressure of the battery cell 1 reaches a threshold, so as to release the internal pressure.

In the battery cell 1 according to the embodiment of the present application, the movable portion 132 is split from the fixed portion 131, and the movable portion 132 is movably disposed on the first wall 112. When thermal runaway occurs in the battery cell 1, gas generated by electrochemical reactions of the electrode assembly 12 increases the internal pressure of the battery cell 1, and the high-pressure gas can drive the movable portion 132 to move from the first position to the second position against the elastic force applied to the movable portion 132 by the elastic member 15, so that the movable portion 132 is separated from the fixed portion 131, the internal pressure of the battery cell 1 is released, and a connection between the battery cell 1 and an external circuit is cut off. When the internal pressure of the battery cell 1 decreases to be less than the elastic force applied to the movable portion 132 by the elastic member 15, the movable portion 132 moves towards the first position under the elastic force of the elastic member 15. When the movable portion 132 is in the first position, the movable portion 132 is electrically connected to the fixed portion 131, so that the battery cell 1 continues to work, the safety and utilization of the battery cell 1 are improved, the service life of the battery cell 1 is prolonged, and a battery 100 including the battery cells 1 has a long service life. In the battery 100 including the battery cells 1, when thermal runaway occurs in a battery cell 1, the movable portion 132 of the battery cell 1 moves from the first position to the second position to release pressure. Meanwhile, the movable portion 132 is in contact with the first wall 112 to conduct electricity, so that the battery cell 1 is internally short-circuited, and the circuit of the entire battery 100 is kept open to ensure normal operation of the battery cell 100.

The battery cell, the battery, and the power consumption device of the embodiments of the present application are described above. A battery cell manufacturing method and device of the embodiments of the present application will be described below. Parts not described in detail may be referred to in the foregoing embodiments.

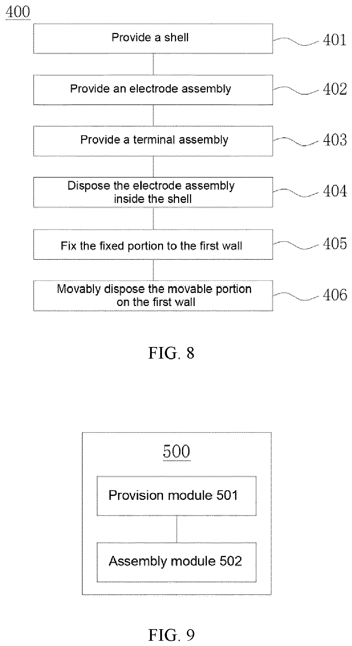

FIG. 8 shows a schematic flowchart of a battery cell manufacturing method 400 according to some embodiments of the present application. According to some embodiments of the present application, as shown in FIG. 8, the present application provides a battery cell manufacturing method 400. The battery cell manufacturing method 400 includes:
401: Provide a shell 11, where the shell 11 includes a first wall 112;
402: Provide an electrode assembly 12;
403: Provide a terminal assembly, where the terminal assembly includes an electrode terminal 13 and an elastic member 15, and the electrode terminal 13 includes a fixed portion 131 and a movable portion 132;
404: Dispose the electrode assembly 12 inside the shell 11;
405: Fixedly dispose the fixed portion 131 on the first wall 112, and electrically connect the fixed portion 131 to the electrode assembly 12; and
406: Movably dispose the movable portion 132 on the first wall 112, so that the movable portion 132 has a first position in contact with the fixed portion 131 and a second position separated from the fixed portion 131.

The elastic member 15 is used for applying elastic force to the movable portion 132 to maintain the movable portion 132 in the first position.

The movable portion 132 is configured to move from the first position to the second position against the elastic force when internal pressure of the battery cell 1 reaches a threshold, so as to release the internal pressure.

FIG. 9 shows a schematic block diagram of a battery cell manufacturing device 500 according to some embodiments of the present application. According to some embodiments of the present application, as shown in FIG. 9, the present application provides a battery cell manufacturing device 500. The battery cell manufacturing device 500 may include: a provision module 501 and an assembly module 502.

The provision module 501 is configured to provide a shell 11, an electrode assembly 12, and a terminal assembly, where the shell 11 includes a first wall 112, the terminal assembly includes an electrode terminal 13 and an elastic member 15, and the electrode terminal 13 includes a fixed portion 131 and a movable portion 132.

The assembly module 502 is configured to dispose the electrode assembly 12 inside the shell 11, fixedly dispose the fixed portion 131 on the first wall 112, electrically connect the fixed portion 131 to the electrode assembly 12, and movably dispose the movable portion 132 on the first wall 112, so that the movable portion 132 has a first position in contact with the fixed portion 131 and a second position separated from the fixed portion 131, where the elastic member 15 is used for applying elastic force to the movable portion 132 to maintain the movable portion 132 in the first position, and the movable portion 132 is configured to move from the first position to the second position against the elastic force when internal pressure of the battery cell 1 reaches a threshold, so as to release the internal pressure.

Although the present application is described with reference to preferred embodiments, various improvements may be made and components may be replaced with equivalents without departing from the scope of the present application. In particular, as long as there is no structural conflict, various technical features mentioned in the embodiments may be combined in any manner. The present application is not limited to the specific embodiments disclosed herein, but includes all technical solutions falling within the scope of the claims.

## Claims

1. A battery cell, comprising:
a shell, comprising a first wall;
an electrode assembly, disposed inside the shell; and
a terminal assembly, comprising an electrode terminal and an elastic member, wherein the electrode terminal comprises a fixed portion for electrical connection with the electrode assembly and a movable portion for electrical connection with a current collecting component, wherein the fixed portion is fixedly disposed on the first wall, the movable portion is movably disposed on the first wall, the movable portion has a first position in contact with the fixed portion and a second position separated from the fixed portion, the elastic member is configured for applying elastic force to the movable portion, so as to maintain the movable portion in the first position, and wherein
the movable portion is configured to move from the first position to the second position against the elastic force when internal pressure of the battery cell reaches a threshold, so as to release the internal pressure.

2. The battery cell according to claim 1, wherein the fixed portion is insulated and isolated from the first wall, the movable portion in the first position is insulated and isolated from the first wall, and the movable portion in the second position is in contact with the first wall to conduct electricity.

3. The battery cell according to claim 1 or 2, wherein the terminal assembly further comprises:
an insulator, fixed to the first wall, wherein
the fixed portion is fixedly disposed on the insulator, and the movable portion is movably disposed on the insulator.

4. The battery cell according to claim 3, wherein the first wall is formed with a mounting hole, and the insulator is disposed inside the mounting hole.

5. The battery cell according to claim 4, wherein the insulator comprises a cylinder, an outer circumferential surface of the cylinder is connected to a wall of the mounting hole, the movable portion is movably disposed inside the cylinder in an axial direction of the cylinder and is in sealing fit with an inner circumferential surface of the cylinder, the fixed portion is fixed to the cylinder, and the fixed portion is located on a side, close to an interior of the battery cell, of the movable portion in the axial direction of the cylinder.

6. The battery cell according to claim 5, wherein the cylinder comprises a side wall and a bottom wall, the side wall is disposed at a periphery of the bottom wall, the fixed portion penetrates the bottom wall, the movable portion is in sealing fit with an inner circumferential surface of the side wall, a first chamber is formed between the movable portion and the bottom wall, and the bottom wall or the fixed portion is formed with a first through hole for communicating the interior of the battery cell and the first chamber.

7. The battery cell according to claim 6, wherein a breathable film is disposed at the first through hole.

8. The battery cell according to any one of claims 5-7, wherein the insulator further comprises a top cover, the top cover covers an end, away from the interior of the battery cell, of the cylinder, the movable portion comprises a piston and a piston rod, the piston is movably disposed inside the cylinder and is in sealing fit with the inner circumferential surface of the cylinder, one end of the piston rod is connected to the piston, and the other end passes through the top cover for connecting the current collecting component.

9. The battery cell according to claim 8, wherein the elastic member is sleeved on the piston rod, one end of the elastic member abuts against the piston, and the other end abuts against the top cover.

10. The battery cell according to any one of claims 5-9, wherein the battery cell further comprises:
a pressure relief channel, wherein one end of the pressure relief channel extends to the inner circumferential surface of the cylinder;
when the movable portion is in the first position, the movable portion seals one end of the pressure relief channel, so as to disconnect the pressure relief channel from the interior of the battery cell; and
when the movable portion is in the second position, the movable portion opens one end of the pressure relief channel, so as to communicate the pressure relief channel with the interior of the battery cell.

11. The battery cell according to claim 10, wherein the pressure relief channel comprises a first segment and a second segment in communication with each other, the first segment is disposed on the cylinder, and the second segment is disposed on the first wall.

12. The battery cell according to any one of claims 5-11, wherein the side wall is formed with a second through hole, a protrusion is formed on the wall of the mounting hole, the protrusion extends into the second through hole, and the movable portion is, when in the second position, in contact with the protrusion to conduct electricity.

13. The battery cell according to any one of claims 1-12, wherein two terminal assemblies are provided, and the electrode terminals of the two terminal assemblies have opposite polarities.

14. The battery cell according to any one of claims 1-13, wherein the shell comprises a shell body and an end cover, the shell body has an opening, the end cover is configured for covering the opening, and the first wall is the end cover.

15. A battery, comprising the battery cell according to any one of claims 1-14.

16. A power consumption device, comprising the battery according to claim 15.

17. A battery cell manufacturing method, comprising:
providing a shell, wherein the shell comprises a first wall;
providing an electrode assembly;
providing a terminal assembly, wherein the terminal assembly comprises an electrode terminal and an elastic member, and the electrode terminal comprises a fixed portion and a movable portion;
disposing the electrode assembly inside the shell;
disposing fixedly the fixed portion on the first wall, and connecting electrically the fixed portion to the electrode assembly; and
disposing movably the movable portion on the first wall, so that the movable portion has a first position in contact with the fixed portion and a second position separated from the fixed portion, wherein
the elastic member is configured for applying elastic force to the movable portion, so as to maintain the movable portion in the first position; and
the movable portion is configured to move from the first position to the second position against the elastic force when internal pressure of the battery cell reaches a threshold, so as to release the internal pressure.

18. A battery cell manufacturing device, comprising:
a provision module, configured to provide a shell, an electrode assembly, and a terminal assembly, wherein the shell comprises a first wall, the terminal assembly comprises an electrode terminal and an elastic member, and the electrode terminal comprises a fixed portion and a movable portion; and
an assembly module, configured to dispose the electrode assembly inside the shell, fixedly dispose the fixed portion on the first wall, electrically connect the fixed portion to the electrode assembly, and movably dispose the movable portion on the first wall, so that the movable portion has a first position in contact with the fixed portion and a second position separated from the fixed portion, wherein the elastic member is configured for applying elastic force to the movable portion, so as to maintain the movable portion in the first position, and the movable portion is configured to move from the first position to the second position against the elastic force when internal pressure of the battery cell reaches a threshold, so as to release the internal pressure.
